# FASCICULE DE BREVET EUROPEEN

(11) **EP 1 558 919 B1**
(45) Date de publication et mention de la délivrance du brevet: **18.03.2009**
(21) Numéro de dépôt: 03778458.4
(22) Date de dépôt: 24.10.2003
(51) Int. Cl.: G01N 21/90, G01N 21/958

(54) **PROCEDE ET DISPOSITIF POUR DETECTER DES DEFAUTS DE SURFACE PRESENTES PAR UNE BAGUE D'UN RECIPIENT DE REVOLUTION TRANSPARENT OU TRANSLUCIDE**
VERFAHREN UND VORRICHTUNG ZUR DETEKTION VON OBERFLÄCHENFEHLERN EINES RINGFÖRMIGEN, TRANSPARENTEN ODER DURCHSCHEINENDEN GEFÄSSES
METHOD AND DEVICE FOR THE DETECTION OF SURFACE DEFECTS ON THE FINISH OF A TRANSPARENT OR TRANSLUCENT ROTATING CONTAINER

(30) Priorité: 25.10.2002 FR 0213357
(43) Date de publication de la demande: 03.08.2005
(73) Titulaire: Tiama, 69700 Montagny (FR)
(72) Inventeur: GERARD, Marc, F-69700 GIVORS (FR); BATHELET, Guillaume, F-69280 Marcy L'Etoile (FR)
(74) Mandataire: Thibault, Jean-Marc
(86) Numéro de dépôt international: PCT/FR2003/003166
(87) Numéro de publication internationale: WO 2004/040278

(56) Documents cités:
- EP-A- 0 061 021
- EP-A- 0 371 546
- EP-A- 0 497 477
- US-A- 4 424 441
- US-A- 5 592 286
- PATENT ABSTRACTS OF JAPAN vol. 1998, no. 08, 30 juin 1998 (1998-06-30) & JP 10 062359 A (OJI KOEI KK;IMAMURA FUJIO), 6 mars 1998 (1998-03-06)

## Description

La présente invention concerne le domaine technique de l'inspection d'objets, d'articles creux ou, d'une manière générale, de récipients transparents ou translucides, tels que, par exemple, des bouteilles, des pots ou des flacons réalisés en verre.

L'objet de l'invention vise plus précisément le domaine de l'inspection de tels récipients, en vue de déceler, sur la bague de tels récipients, la présence de défauts de surface, tels qu'un défaut de matière, dit défaut de fil, correspondant à un surplus ou un manque de matière (line over finish), des défauts appelés bouillons ou bulles, ou des défauts correspondant à une bague écaillée.

L'état de la technique a proposé différents dispositifs de contrôle de la qualité des bagues de récipients, afin d'éliminer ceux qui comportent des défauts susceptibles d'affecter leur caractère esthétique ou, plus grave, de présenter un réel danger pour l'utilisateur. Il est connu, par exemple par les documents EP 0 497 477 ou JP 10 062 359, un dispositif de détection comportant une source d'éclairage apte à fournir un faisceau incident concentré sur la surface supérieure de la bague. Une caméra est positionnée de manière à recevoir les faisceaux lumineux réfléchis qui sont transmis à une unité de traitement, adaptée pour reconstituer une image de la surface de la bague après rotation de l'objet sur un tour. L'unité de traitement analyse les variations de l'image dans le temps et dans l'espace, afin de détecter la présence éventuelle de défauts. Une telle solution technique ne donne pas satisfaction en pratique, dans la mesure où les images présentent un maximum de parasites dus aux différentes réflexions de lumière sur la surface du récipient. Les irrégularités de la surface de la bague génèrent un bruit important et masquent les petits défauts tels que les défauts de fil.

L'objet de l'invention vise à remédier aux inconvénients énoncés ci-dessus en proposant une solution pour détecter, de manière fiable, sur la bague d'un récipient transparent ou translucide possédant un axe de révolution, des défauts de surface généralement difficiles à détecter, tels que des défauts de fil.

Pour atteindre un tel objectif, l'objet de l'invention vise à proposer un procédé pour détecter des défauts de surface présentés par une bague d'un récipient, conforme à la revendication 1.

Selon une caractéristique avantageuse de réalisation, le procédé consiste à analyser l'image en effectuant une analyse des caractéristiques de forme des zones claires, afin d'identifier la présence d'un défaut de surface.

Selon une autre caractéristique avantageuse de réalisation, le procédé consiste à éclairer, par un faisceau lumineux incident, une section radiale de la surface de la bague du récipient selon une direction incidente déterminée, parallèle à l'axe de révolution du récipient, et à disposer un capteur linéaire de mesure parallèle au plan radial et orienté selon une direction s'étendant dans un plan perpendiculaire au plan radial et parallèle à l'axe de révolution.

Selon cette caractéristique avantageuse de réalisation, le procédé consiste à disposer d'un deuxième capteur linéaire de mesure, symétrique au premier capteur linéaire de mesure par rapport au plan radial.

Un autre objet de l'invention est de proposer un dispositif pour détecter des défauts de surface présentés par une bague d'un récipient, transparent ou translucide, possédant un axe de révolution, le dispositif étant conforme à la revendication 5.

Selon une caractéristique préférée de réalisation, l'unité d'analyse et de traitement comporte des moyens d'analyse des caractéristiques de forme des zones claires, afin d'identifier la présence d'un défaut de surface.

Selon une variante préférée de réalisation, la source lumineuse éclaire, par un faisceau lumineux incident, une section radiale de la surface de la bague du récipient, le capteur linéaire de mesure étant positionné parallèlement au plan radial en étant orienté selon une direction s'étendant dans un plan perpendiculaire au plan radial et parallèle à l'axe de révolution.

Avantageusement, le dispositif selon l'invention comporte un deuxième capteur linéaire de mesure, placé de manière symétrique au premier capteur linéaire de mesure par rapport au plan radial.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue schématique en élévation illustrant la mise en oeuvre d'un dispositif de détection conforme à l'invention.

Les **fig. 2a** et **2b** sont des vues en perspective illustrant le principe de fonctionnement du dispositif de détection conforme à l'invention.

La **fig. 3** est un schéma montrant, selon une section transversale d'un récipient, la projection des faisceaux lumineux du dispositif de détection conforme à l'invention.

La **fig. 4** montre une image prise par un dispositif de détection conforme à l'invention.

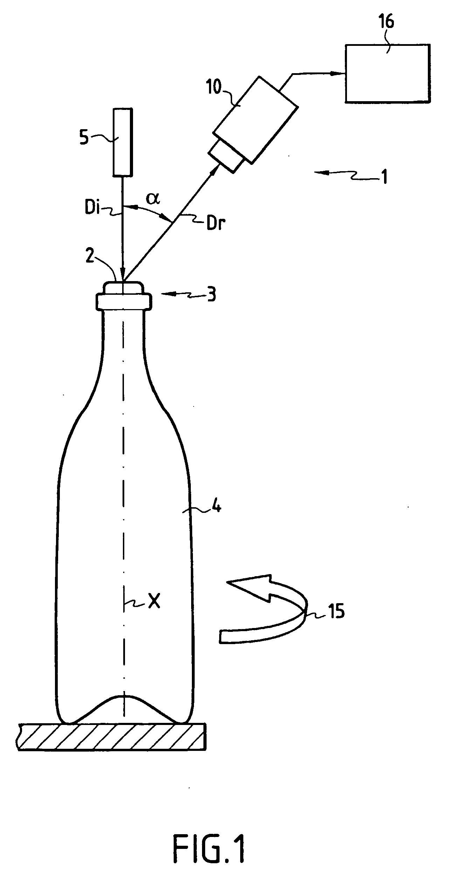

Tel que cela ressort plus précisément des **fig. 1** à **3****,** l'objet de l'invention concerne un procédé et un dispositif **1,** adaptés pour détecter des défauts présentés par la surface **2** d'une bague **3** d'un récipient **4,** transparent ou translucide, possédant un axe de révolution ou de symétrie **X.** Un tel dispositif **1** comporte une source lumineuse **5** adaptée pour éclairer, par un faisceau lumineux incident **6,** une section s de la surface **2** de la bague du récipient selon une direction incidente déterminée **Dᵢ.**

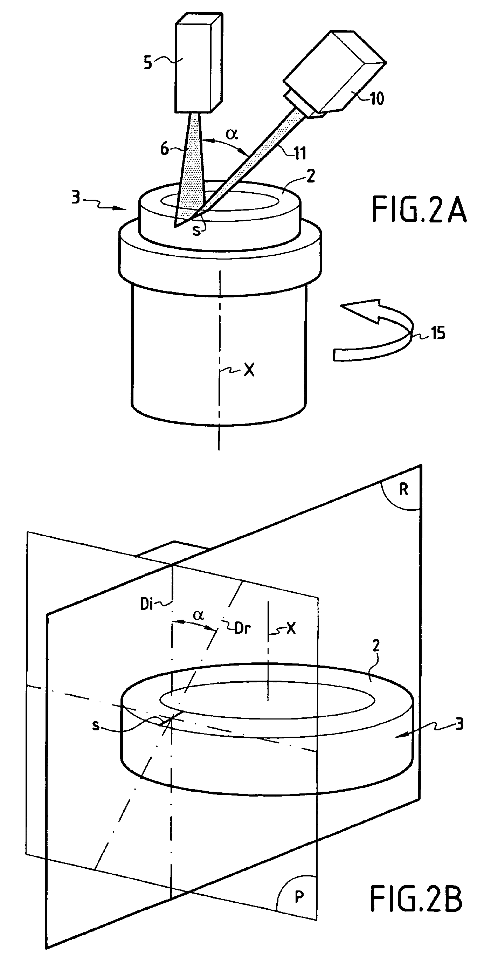

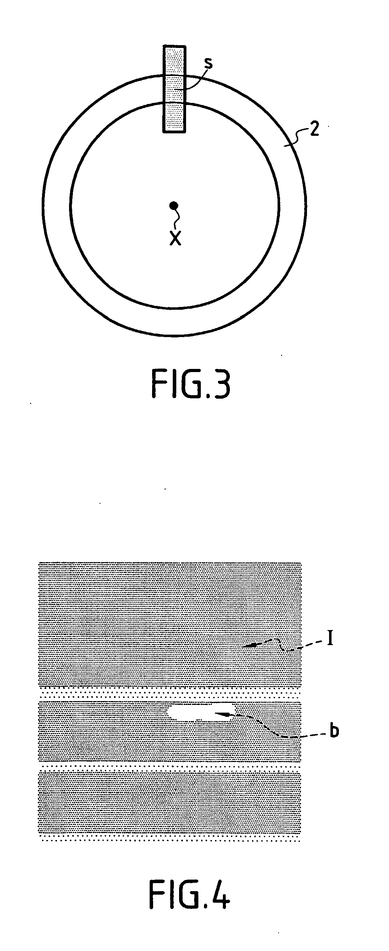

Selon une caractéristique préférée de réalisation, la source lumineuse **5** éclaire, par un faisceau lumineux incident **6,** une section radiale **s** de la surface **2** de la bague du récipient, tel que cela ressort précisément de la **fig. 3****.** La section radiale **s** de la surface **2** de la bague correspond donc à l'épaisseur d'une paroi du récipient **4** prise, au niveau de la surface **2** de la bague et dans un plan passant par l'axe de révolution **X.** Dans l'exemple de réalisation illustré sur les dessins, la source lumineuse **5** est positionnée de manière à éclairer, par son faisceau lumineux incident **6,** une section radiale s de la surface **2** de la bague **3** du récipient **4,** selon une direction incidente déterminée **Dᵢ** parallèle à l'axe de révolution **X** du récipient (**fig. 2b****).**

Le dispositif **1** selon l'invention comporte, également, au moins un capteur linéaire **10** de mesure de faisceaux lumineux, disposé pour récupérer les faisceaux lumineux réfléchis **11** par les défauts présentés par la surface **2** de la bague **3** du récipient. Le capteur linéaire de mesure **10,** tel qu'une caméra, est positionné pour récupérer les faisceaux lumineux réfléchis **11** par la section **s** de la surface **2** de la bague. A cet égard, la barrette de cellules photosensibles de la caméra **10** est orientée selon une direction parallèle à la section **s** de la surface **2** éclairée par le faisceau incident **6.** Dans l'exemple préféré de réalisation, pour lequel la source lumineuse **5** éclaire une section radiale **s** de la bague du récipient, le capteur linéaire de mesure **10** est positionné parallèlement au plan radial **R.**

Par ailleurs, l'axe de vision de la caméra **10,** schématisé par le faisceau lumineux réfléchi **11,** s'étend donc selon une direction de réflexion **Dᵣ** formant, avec la direction incidente **Dᵢ,** un angle α compris entre 15 et 45° et, de préférence, de l'ordre de 30°. Dans l'exemple préféré de réalisation illustré sur les dessins et pour lequel la source lumineuse **5** éclaire une section radiale **s** de la bague, la caméra **10** est orientée selon la direction de réflexion **Dᵣ** dans un plan **P** perpendiculaire au plan radial **R** et parallèle à l'axe de révolution **X** (**fig. 2b****).** Bien entendu, ce plan **P,** dans lequel s'étend l'axe de visée de la caméra **10,** coupe la section radiale **s** de la bague éclairée par le faisceau lumineux incident **6,** de manière que la barrette de cellules photosensibles puisse scruter la section s de la surface **2** de bague, selon une largeur élémentaire donnée.

Dans l'exemple illustré, il est à noter que la direction incidente **Dᵢ** du faisceau lumineux est parallèle à l'axe de révolution **X** du récipient. Bien entendu, la position entre la source lumineuse **5** et le capteur linéaire de mesure **10** peut être interchangée. Selon cette variante de réalisation, la direction de réflexion **Dᵣ,** dans laquelle est placée la caméra **10,** est parallèle à l'axe de révolution **X** du récipient, tandis que la direction incidente **Dᵢ** du faisceau lumineux incident **6** est inclinée de manière à former, avec la direction de réflexion **Dᵣ,** l'angle α précédemment défini.

La disposition relative, entre la source lumineuse **5** et le capteur linéaire de mesure **10,** permet de récupérer uniquement la lumière réfléchie par les défauts présentés par la surface **2** de la bague **3.** Le capteur linéaire de mesure **10** est positionné de façon à ne pas recevoir la lumière réfléchie par la surface de bague ne présentant pas de défauts. En effet, dans l'exemple de réalisation illustré sur les dessins, la lumière incidente **6,** parallèle à l'axe de révolution **X** du récipient, est transmise ou réfléchie selon le même axe lorsque la surface **2** de bague ne présente pas de défauts. Ainsi, seule une partie de la lumière réfléchie par les défauts de la surface **2** selon un angle α est captée par la caméra **10.** De cette façon, les défauts de surface ne sont pas masqués par la réflexion directe de la surface **2.** Un tel procédé de détection rend la détection performante et fiable même pour des petits défauts de surface.

Le dispositif de détection **1** selon l'invention comporte également des moyens **15** assurant la rotation du récipient **4** autour de son axe de révolution **X** sur au moins un tour complet de manière que la caméra scrute la totalité de la surface **2** de la bague **3** du récipient **4.** En effet, la rotation du récipient **4** autour de son axe de révolution **X** permet à la caméra de visualiser, successivement, chacune des sections **s** de largeurs élémentaires formant ensemble la surface **2** de la bague **3.**

Le dispositif de détection **1** selon l'invention comporte, également, une unité d'analyse et de traitement **16** reliée au capteur linéaire de mesure **10.** Cette unité **16** d'analyse et de traitement des faisceaux lumineux reçus par le capteur linéaire **10** est adaptée pour créer une image et pour analyser l'image, de manière à identifier, dans l'image, la présence d'un défaut de surface correspondant à une zone claire. En effet, comme expliqué ci-dessus, le capteur linéaire **10** est positionné de manière à récupérer le flux lumineux réfléchi par le défaut.

L'unité d'analyse et de traitement **16** comporte en entrée, de manière habituelle, un circuit d'acquisition relié en entrée à la caméra qui délivre des signaux électroniques représentatifs de l'intensité lumineuse reçue par chacune des cellules photosensibles de la caméra. Le circuit d'acquisition assure la conversation du signal analogique en un signal numérique codé sur un certain nombre de bits suivant une échelle de gris déterminée. Une telle image brute est mémorisée et filtrée, afin d'atténuer les contrastes de l'image. L'image filtrée est soustraite à l'image brute, de manière à éliminer les parasites, en vue d'obtenir une image finale **I,** telle qu'illustrée à la **fig. 4****.** Comme expliqué ci-dessus, les défauts apparaissent sous la forme d'une zone claire **b,** dans la mesure où elle correspond à la lumière réfléchie par les défauts. L'unité **16** comporte des moyens d'analyse de l'image reposant sur une analyse des caractéristiques de forme des zones claires **b,** afin d'identifier la présence d'un défaut de surface. Ces moyens d'analyse permettent ainsi de calculer des caractéristiques telles que par exemple la position spatiale, la surface, le périmètre, le centre de gravité ou le niveau de gris des zones claires. De telles caractéristiques sont comparées à des valeurs de seuil permettant de décider si la zone claire **b** détectée correspond ou non à un défaut.

Selon une autre caractéristique de l'invention, il est à noter que le dispositif de détection **1** peut comporter un deuxième capteur linéaire de mesure, placé de manière symétrique au premier capteur linéaire de mesure **10** par rapport au plan radial **R.** Selon cette variante, le deuxième capteur linéaire de mesure est positionné parallèlement au plan radial **R** en étant orienté selon une direction s'étendant dans le plan perpendiculaire **P** avec un angle d'inclinaison α de sens opposé par rapport à la direction **Dᵢ.**

L'invention n'est pas limitée aux exemples décrits et représentés car diverses modifications peuvent y être apportées sans sortir de son cadre.

## Revendications

1. Procédé pour détecter des défauts de surface **(2),** présentés par une bague **(3),** d'un récipient transparent ou translucide **(4)** possédant un axe de révolution **(X),** comprenant les étapes suivantes :
- éclairer, par un faisceau lumineux incident **(6),** une section radiale **(s)** de la surface **(2)** de la bague (3) du récipient **(4),** selon une direction incidente déterminée (**Dᵢ**),
- disposer un capteur linéaire de mesure **(10),** selon une direction de réflexion (**Dᵣ**), déterminée pour récupérer le faisceau lumineux réfléchi par le défaut de surface présenté par la bague, l'angle (α) entre les directions incidente (**Dᵢ**) et de réflexion (**Dᵣ**) étant compris entre 15 et 45° et, de préférence, de l'ordre de 30°, l'une des directions de réflexion **(Dᵣ)** ou incidente **(Dᵢ)** est parallèle à l'axe de révolution **(X)** du récipient tandis que l'autre des directions s'étend dans un plan perpendiculaire **(P)** au plan radial **(R)** du récipient et parallèle à l'axe de révolution **(X).**
- à assurer la rotation du récipient (**4**) autour de l'axe de révolution (**X**) sur au moins un tour,
- et à traiter le faisceau lumineux, reçu par le capteur linéaire **(10),** de manière à créer une image (**I**) et à analyser l'image afin d'identifier la présence d'un défaut de surface correspondant à une zone claire **(b).**

2. Procédé selon la revendication 1, **caractérisé en ce qu'**il consiste à analyser l'image (**I**) en effectuant une analyse des caractéristiques de forme des zones claires (**b**) afin d'identifier la présence d'un défaut de surface.

3. Procédé selon la revendication 1 ou 2, **caractérisé en ce qu'**il consiste à éclairer, par un faisceau lumineux incident **(6),** une section radiale **(s)** de la surface **(2)** de la bague du récipient **(4)** selon une direction incidente déterminée parallèle à l'axe de révolution **(X)** du récipient, et à disposer un capteur linéaire de mesure **(10)** parallèle au plan radial **(R)** et orienté selon une direction s'étendant dans un plan perpendiculaire **(P)** au plan radial et parallèle à l'axe de révolution.

4. Procédé selon la revendication 3, **caractérisé en ce qu'**il consiste à disposer d'un deuxième capteur linéaire de mesure symétrique au premier capteur linéaire de mesure **(10)** par rapport au plan radial **(R).**

5. Dispositif pour détecter des défauts de surface **(2)** présentés par une bague **(3)** d'un récipient **(4)** transparent ou translucide possédant un axe de révolution **(X)** comportant :
- une source lumineuse **(5)** adaptée pour éclairer par un faisceau lumineux incident **(6),** une section radiale **(s)** de la surface de la bague du récipient, selon une direction incidente déterminée (**Dᵢ**),
- au moins un capteur linéaire de mesure **(10)** de faisceaux lumineux disposé pour récupérer le faisceau lumineux réfléchi par le défaut de surface présenté par la bague, l'angle (α) entre les directions incidente (**Dᵢ**) et de réflexion (**Dᵣ**) étant compris entre 15 et 45° et, de préférence, de l'ordre de 30°, l'une des directions de réflexion (**Dᵣ**) ou incidente (**Dᵢ**) est parallèle à l'axe de révolution **(X)** du récipient tandis que l'autre des directions s'étend dans un plan perpendiculaire **(P)** au plan radial **(R)** du récipient et parallèle à l'axe de révolution **(X).**
- des moyens **(15)** assurant la rotation du récipient autour de l'axe de révolution sur au moins un tour,
- et une unité **(16)** d'analyse et de traitement des faisceaux lumineux reçus par le capteur linéaire et adaptée pour créer une image (**I**) et pour analyser l'image de manière à identifier la présence d'un défaut de surface correspondant à une zone claire **(b).**

6. Dispositif selon la revendication 5, **caractérisé en ce que** l'unité d'analyse et de traitement **(16)** comporte des moyens d'analyse des caractéristiques de forme des zones claires **(b)** afin d'identifier la présence d'un défaut de surface.

7. Dispositif selon la revendication 5 ou 6, **caractérisé en ce que** la source lumineuse **(5)** éclaire, par un faisceau lumineux incident **(6),** une section radiale **(s)** de la surface **(2)** de la bague du récipient selon une direction incidente (**Dᵢ**) déterminée parallèle à l'axe de révolution (X) du récipient, et **en ce que** le capteur linéaire de mesure **(10)** est positionné parallèlement au plan radial **(R),** en étant orienté selon une direction s'étendant dans un plan perpendiculaire **(P)** au plan radial et parallèle à l'axe de révolution (**X**).

8. Dispositif selon la revendication 7, **caractérisé en ce qu'**il comporte un deuxième capteur linéaire de mesure **(10)** placé de manière symétrique au premier capteur linéaire de mesure par rapport au plan radial (**R**).

## Claims

1. A method to detect surface defects (2), exhibited by a ring (3) on a transparent or translucent receptacle (4), with an axis of revolution (X) that includes the following stages designed to:
- illuminate, with an incident light beam (6), a radial section (s) of the surface (2) of the ring (3) of the receptacle (4), along a given incident direction (Dᵢ),
- to place a linear measuring sensor (10) along a given direction of reflection (Dᵣ), in order to capture the light beam reflected by the surface defect presented by the ring, where the angle (a) between the incident direction (Dᵢ) and reflection direction (Dᵣ) is between 15 and 45° and preferably of the order of 30°, where one of the reflection (Dᵣ) or incident (Dᵢ) directions is parallel to the axis of revolution (X) of the receptacle, while the other direction lies in a plane perpendicular (P) to the radial plane (R) of the receptacle and parallel to the axis of revolution (X).
- to perform the rotation of the receptacle (4) around the axis of revolution (X) by at least one turn,
- and to process the light beam received by the linear sensor (10) so as to create an image (I) and to analyse the image in order to identify the presence of a surface defect, corresponding to a light area (b).

2. A method according to claim 1, **characterised in that** it consists of analysing the image (I) by performing an analysis of the shape characteristics of the light areas (b) in order to identify the presence of a surface defect.

3. A method according to claim 1 or 2, **characterised in that** it consists of illuminating, with an incident light beam (6), a radial section (s) of the surface (2) of the ring of the receptacle (4) along a given incident direction parallel to the axis of revolution (X) of the receptacle, and placing a linear measuring sensor (10) parallel to the radial plane (R) and oriented along a direction that lies in a plane perpendicular (P) to the radial plane and parallel to the axis of revolution.

4. A method according to claim 3, **characterised in that** it consists of placing a second linear measuring sensor symmetrically to the first linear measurement sensor (10) in relation to the radial plane (R).

5. A device to detect surface defects (2) presented by a ring (3) of a transparent or translucent receptacle (4), with an axis of revolution (X) that includes:
- a light source (5) designed to illuminate, with an incident light beam (6), a radial section (s) of the surface of the ring of the receptacle, along a given incident direction (Dᵢ),
- at least one linear measuring sensor(10) of light beams, placed so as to capture the light beam reflected by the surface defect presented by the ring, where the angle (a) between the incident (Dᵢ) and reflection(Dᵣ) directions is between 15 and 45 degrees, and preferably of the order of 30°, and where one of the reflection (Dᵣ) or incident (Dᵢ) directions is parallel to the axis of revolution (X) of the receptacle while the other direction lies in a plane perpendicular (P) to the radial plane (R) of the receptacle and parallel to the axis of revolution (X).
- a means (15) to perform the rotation of the receptacle around the axis of revolution by at least one turn,
- and a unit (16) for the analysis and processing of the light beams received by the linear sensor, designed to create an image (I) and to analyse the image so as to identify the presence of a surface defect corresponding to a light zone (b).

6. A device according to claim 5, **characterised in that** the analysis and processing units (16) include means for analysing the shape characteristics of the light areas (b), in order to identify the presence of a surface defect.

7. A device according to claims 5 or 6, **characterised in that** the light source (5), by means of an incident light beam (6), illuminates a radial section (s) of the surface (2) of the ring of the receptacle along a given incident direction (Dᵢ) parallel to the axis of revolution (X) of the receptacle, and **in that** the linear measuring sensor (10) is positioned parallel to the radial plane (R), being oriented along a direction that lies in a plane perpendicular (P) to the radial plane and parallel to the axis of revolution (X).

8. A device according to claim 7, **characterised in that** it includes a second linear measuring sensor (10), placed symmetrically to the first linear measuring sensor, in relation to the radial plane (R).

## Patentansprüche

1. Verfahren zur Erfassung von Oberflächenfehlern (2) an einem Ring (3) eines transparenten oder lichtdurchlässigen Behälters (4) mit einer Rotationsachse (X), welches die folgenden Schritte umfaßt:
- Beleuchten eines radialen Abschnitts (s) der Oberfläche (2) des Rings (3) des Behälters (4) mittels eines einfallenden Lichtstrahls (6) entlang einer bestimmten Einfallsrichtung (Dᵢ),
- Anordnen eines linearen Meßfühlers (10) entlang einer bestimmten Reflektionsrichtung (Dᵣ), um den durch den Oberflächenfehler des Rings reflektierten Lichtstrahl aufzufangen, wobei der Winkel (α) zwischen der Einfallsrichtung (Dᵢ) und der Reflektionsrichtung (Dᵣ) zwischen 15 und 45° und vorzugsweise in der Größenordnung von 30° liegt, wobei die eine der Richtungen, nämlich die Reflektionsrichtung (Dᵣ) oder die Einfallsrichtung (Dᵢ) parallel zur Rotationsachse (X) des Behälters verläuft, während die andere der Richtungen sich in einer Ebene (P) erstreckt, die senkrecht zur Radialebene (R) des Behälters und parallel zur Rotationsachse (X) verläuft,
- Sicherstellen der Rotation des Behälters (4) um die Rotationsachse (X) über wenigstens eine Umdrehung, und
- Verarbeiten des durch den Linearfühler (10) empfangenen Lichtstrahls derart, daß ein Bild (I) erzeugt wird, und Analysieren des Bildes, um das Vorliegen eines einem hellen Bereich (b) entsprechenden Oberflächenfehlers festzustellen.

2. Verfahren nach Anspruch 1, **dadurch gekennzeichnet, daß** es darin besteht, das Bild (I) unter Durchführen einer Analyse der Formmerkmale der hellen Bereiche (b) zu analysieren, um das Vorliegen eines Oberflächenfehlers festzustellen.

3. Verfahren nach Anspruch 1 oder 2, **dadurch gekennzeichnet, daß** es darin besteht, mittels eines einfallenden Lichtstrahls (6) einen radialen Abschnitt (s) der Oberfläche (2) des Rings des Behälters (4) entlang einer bestimmten, zur Rotationsachse (X) des Behälters parallel verlaufenden Einfallsrichtung zu beleuchten und einen linearen Meßfühler (10) anzuordnen, der parallel zur Radialebene (R) steht und entlang einer Richtung ausgerichtet ist, die sich in einer zur Radialebene senkrechten und zur Rotationsachse parallelen Ebene (P) erstreckt.

4. Verfahren nach Anspruch 3, **dadurch gekennzeichnet, daß** es darin besteht, über einen zweiten linearen Meßfühler zu verfügen, der bezogen auf die Radialebene (R) zu dem ersten linearen Meßfühler (10) symmetrisch ist.

5. Vorrichtung zur Erfassung von Oberflächenfehlern (2) an einem Ring (3) eines transparenten oder lichtdurchlässigen Behälters (4) mit einer Rotationsachse (X), welche folgendes umfaßt:
- eine geeignete Lichtquelle (5), um einen radialen Abschnitt (s) der Oberfläche des Rings des Behälters mittels eines einfallenden Lichtstrahls (6) entlang einer bestimmten Einfallsrichtung (Dᵢ) zu beleuchten,
- wenigstens einen Linearfühler (10) zum Messen von Lichtstrahlen, der angeordnet ist, um den durch den Oberflächenfehler des Rings reflektierten Lichtstrahl aufzufangen, wobei der Winkel (α) zwischen der Einfallsrichtung (Dᵢ) und der Reflektionsrichtung (Dᵣ) zwischen 15 und 45° und vorzugsweise in der Größenordnung von 30° liegt, wobei die eine der Richtungen, nämlich die Reflektionsrichtung (Dᵣ) oder die Einfallsrichtung (Dᵢ) parallel zur Rotationsachse (X) des Behälters verläuft, während die andere der Richtungen sich in einer Ebene (P) erstreckt, die senkrecht zur Radialebene (R) des Behälters und parallel zur Rotationsachse (X) verläuft,
- Mittel (15), welche die Rotation des Behälters um die Rotationsachse über wenigstens eine Umdrehung sicherstellen, sowie
- eine Einheit (16) zum Analysieren und Verarbeiten der durch den Linearfühler empfangenen Lichtstrahlen, die geeignet ist, ein Bild (I) zu erzeugen und das Bild derart zu analysieren, daß das Vorliegen eines einem hellen Bereich (b) entsprechenden Oberflächenfehlers erkannt wird.

6. Vorrichtung nach Anspruch 5, **dadurch gekennzeichnet, daß** die Analyse- und Verarbeitungseinheit (16) Mittel zum Analysieren der Formmerkmale der hellen Bereiche (b) umfaßt, um das Vorliegen eines Oberflächenfehlers festzustellen.

7. Vorrichtung nach Anspruch 5 oder 6, **dadurch gekennzeichnet, daß** die Lichtquelle (5) einen radialen Abschnitt (s) der Oberfläche (2) des Rings des Behälters mittels eines einfallenden Lichtstrahls (6) entlang einer bestimmten, zur Rotationsachse (X) des Behälters parallel verlaufenden Einfallsrichtung (Dᵢ) beleuchtet, und daß der lineare Meßfühler (10) parallel zur Radialebene (R) angeordnet und dabei entlang einer Richtung ausgerichtet ist, die sich in einer zur Radialebene senkrechten und zur Rotationsachse (X) parallelen Ebene (P) erstreckt.

8. Vorrichtung nach Anspruch 7, **dadurch gekennzeichnet, daß** sie einen zweiten linearen Meßfühler (10) umfaßt, der bezogen auf die Radialebene (R) symmetrisch zu dem ersten linearen Meßfühler angeordnet ist.
